# FASCICULE DE BREVET EUROPEEN

(11) **EP 1 460 257 B1**
(45) Date de publication et mention de la délivrance du brevet: **07.01.2009**
(21) Numéro de dépôt: 04300154.4
(22) Date de dépôt: 19.03.2004
(51) Int. Cl.: F02F 1/24, F02B 23/02

(54) **Moteur à combustion interne à injection directe**
Brennkraftmaschine mit Direkteinspritzung
Direct injection internal combustion engine

(30) Priorité: 21.03.2003 FR 0303670
(43) Date de publication de la demande: 22.09.2004
(73) Titulaire: RENAULT S.A.S., 92100 Boulogne Billancourt (FR)
(72) Inventeur: Duclos, Jean-Marc, 91470 Forges les Bains (FR); Sauton, Fabien, 78280 Guyancourt (FR); Servant, Cédric, 92800 Puteaux (FR)

(56) Documents cités:
- GB-A- 421 101
- GB-A- 545 802
- GB-A- 1 146 589
- GB-A- 2 202 582
- US-A- 2 556 773
- PATENT ABSTRACTS OF JAPAN vol. 2000, no. 11, 3 janvier 2001 (2001-01-03) -& JP 2000 234521 A (MITSUBISHI AUTOMOB ENG CO LTD;MITSUBISHI MOTORS CORP), 29 août 2000 (2000-08-29)
- PATENT ABSTRACTS OF JAPAN vol. 2000, no. 11 03 Janvier 2001 & JP 2000 234521 A (MITSUBISHI) 29 Août 2000

## Description

La présente invention concerne un moteur à combustion interne à injection directe.

Elle s'adresse, plus précisément, aux moteurs comportant au moins un cylindre et un piston mobile axialement dans le cylindre, et dans lesquels le carburant est injecté dans la chambre de combustion par un injecteur fixé sur une culasse obturant une extrémité du cylindre pour former la dite chambre de combustion, la pointe, ou nez, de l'injecteur dépassant dans la chambre de combustion et comportant des orifices d'injection du carburant. On définit la chambre de combustion comme étant l'espace situé à l'intérieur du cylindre, entre le piston au point mort haut, et la culasse.

L'invention s'applique à tous types de moteurs, qu'ils soient à deux ou quatre temps, Cependant, elle s'applique plus particulièrement aux moteurs Diesel à quatre temps à soupapes et plus particulièrement encore aux moteurs pour véhicules automobiles, où chaque cylindre comporte un injecteur de type à haute pression, à trous ou à nappe.

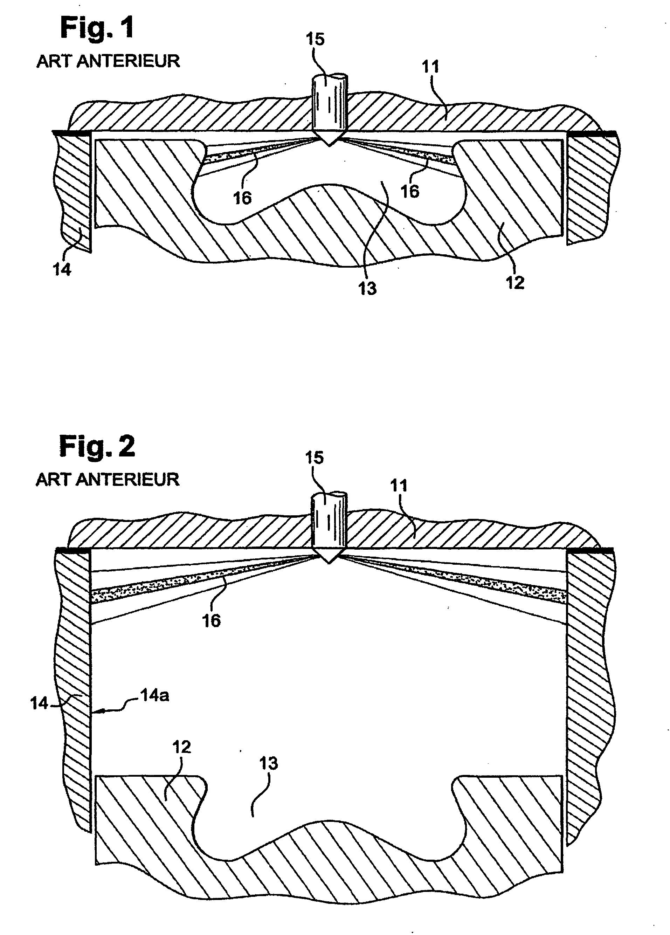

Actuellement, dans les moteurs Diesels à injection directe, la chambre de combustion est principalement localisée dans le piston. Comme on peut le voir figures 1 et 2, qui représentent un exemple de réalisation de la chambre de combustion selon l'art antérieur, la culasse 11 est généralement plate et la face supérieure du piston 12 présente une cavité 13, en général de révolution autour de l'axe du cylindre 14. L'injecteur 15 est placé en position centrale, sur l'axe du cylindre ou à proximité directe, et comporte une pluralité de trous, en général de 5 à 10 dans les réalisations classiques connues.

La forme de la chambre de combustion 13 et la position précise de l'injecteur 15 sont déterminées de manière à permettre aux jets de carburant 16 issus des trous de l'injecteur de se mélanger au mieux avec le comburant introduit dans la chambre, à savoir un mélange d'air et de gaz d'échappement, ceci afin d'améliorer le rendement de combustion et de réduire les émissions polluantes.

Il est donc connu de rechercher à optimiser les interactions des jets de carburant avec les parois contre lesquelles ils sont projetés, pour assurer ce mélange optimisé. C'est pourquoi la forme de la cavité réalisée dans la tête de piston est particulièrement étudiée car, comme on le voit figure 1, lorsque l'injection est commandée, et le piston se trouvant sensiblement au point mort haut, ce sont les parois de la dite cavité qui constituent les zones d'impact des jets de carburant.

Mais un problème posé par une disposition de ce type est que la dite cavité de la face supérieure du piston est mobile pendant la durée de l'injection de carburant. Il en résulte que les zones d'impact des jets sont donc variables au cours de l'injection et en particulier elles peuvent se retrouver en dehors de la cavité du piston, lorsque des injections sont effectuées de façon précoce ou tardive par rapport au point mort haut.

Par exemple, comme illustré figure 2, ces injections hors de la cavité du piston peuvent conduire à des impacts directs contre les parois 14a du cylindre, au-dessus du piston, ce qui est particulièrement dommageable du point de vue du contrôle des émissions polluantes, telles que les émissions d'hydrocarbures imbrûlés, de monoxyde de carbone, ou encore les émissions de particules. Ces impacts directs sont aussi dommageables pour la fiabilité du moteur, car ils conduisent, par le ruissellement de carburant sur la surface du cylindre, à une dilution du film d'huile moteur formé sur cette surface, ce qui entraîne finalement une baisse de viscosité du lubrifiant et une usure prématurée des pièces mobiles.

Un changement de la localisation de la chambre de combustion de la tête du piston vers la culasse présente l'avantage de garder fixe l'ensemble géométrique formé par l'injecteur, et donc la géométrie de ses jets, et la chambre de combustion, et ceci tout au long du cycle moteur, indépendamment du moment et de la durée de l'injection par rapport au cycle.

Le document US-6314937 décrit déjà un moteur dans lequel, en vue d'améliorer le mélange air-carburant et de réduire la température de combustion pour limiter la production d'oxydes d'azote, il est prévu de diriger les jets issus de l'injecteur vers la périphérie d'une chambre aménagée spécialement dans la culasse et dans laquelle le haut du piston pénètre. Il est par ailleurs mentionné dans ce document un effet favorable d'une augmentation du diamètre de la chambre de combustion située dans la culasse par rapport au diamètre du cylindre, pour d'une part augmenter la distance entre l'injecteur et les zones d'impact des jets, et d'autre part permettre une augmentation du diamètre des soupapes. Mais du fait de la constitution particulière de ce moteur et notamment de l'utilisation d'un anneau formé par la culasse juste sous la chambre de combustion et dans lequel le haut du piston pénètre au point mort haut pour que le dit anneau ait un rôle de racleur du bord supérieur du piston, rien n'empêche l'effet de dilution du lubrifiant mentionné ci-dessus.

D'autres dispositions visant elles aussi à situer les zones d'impact des jets issus de l'injecteur dans la culasse ont aussi été envisagées. Par exemple dans le document JP-2000234521, il est prévu de former la paroi de la culasse avec des sortes de lèvres s'étendant vers l'intérieur du cylindre, situées à environ mi-rayon entre l'injecteur et la périphérie du cylindre, contre lesquelles les jets de carburant sont projetés. Mais, de par leur localisation, ces lèvres ne peuvent en fait exister que dans des zones de dimensions réduites entre les soupapes, ce qui soit contraint à limiter le nombre de trous de l'injecteur et à diriger très précisément les jets vers ces lèvres, soit à accepter qu'une partie non négligeable du carburant injecté atteigne quand même la paroi du cylindre en passant entre les lèvres et devant les soupapes.

US-A-2 556 773 et/ ou
GB 545 802 A et/ ou GB 421 101 A et/ ou PATENT ABSTRACTS OF JAPAN vol. 2000, no. 11, 3 janvier 2001 (2001-01-03) -& JP 2000 234521 A (MITSUBISHI AUTOMOB ENG CO LTD;MITSUBISHI MOTORS CORP), 29 août 2000 (2000-08-29 , figures ) divulgue un moteur à combustion interne à injection directe, comportant au moins un cylindre et un piston mobile axialement dans le cylindre, et dans lequel le carburant est injecté dans une chambre de combustion par un injecteur fixé sur une culasse obturant une extrémité du cylindre et formant la dite chambre de combustion, le nez de l'injecteur dépassant dans la chambre de combustion et comportant des orifices d'injection du carburant disposés de manière que les jets de carburant soient dirigés vers une surface périphérique (figures) de la dite chambre de combustion, ladite surface périphérique à un bord inférieur situé en retrait vers l'axe du cylindre par rapport à la surface latérale du cylindre.

Par ailleurs, dans le cas d'utilisation d'un mécanisme du type destiné à fournir un taux de compression variable, portant par exemple sur une modification de la course du piston, le positionnement des zones critiques de la chambre de combustion par rapport aux jets de l'injecteur se trouve modifié, ce qui risque de détériorer les performances de la chambre de combustion en termes de rendement et d'émissions polluantes, telles qu'hydrocarbures imbrûlés, monoxyde de carbone et particules.

La présente invention a pour but d'apporter une solution aux divers problèmes évoqués précédemment, et vise particulièrement à assurer les meilleures conditions possibles de mélange entre carburant et comburant lors de l'injection de carburant, tout en évitant les risques de dépôt et de ruissellement de carburant contre la paroi des cylindres.

Avec ces objectifs en vue, l'invention a pour objet un moteur à combustion interne à injection directe, comportant au moins un cylindre et un piston mobile axialement dans le cylindre, selon la revendication 1.

Ainsi, quelle que soit la position du piston lors de l'injection l'impact des jets se fait toujours au même endroit sur la surface périphérique de la culasse définissant le pourtour de la chambre de combustion, et les éventuels dépôts liquides de carburant sur cette surface seront amenés à tomber dans le volume du cylindre lorsque le piston s'éloignera du point mort haut, au lieu de couler contre la surface de la paroi du cylindre.

De plus, le recouvrement de la périphérie de la face supérieure du piston par le bord inférieur en retrait de la chambre de combustion, lorsque le piston est voisin du point mort haut, est un obstacle supplémentaire empêchant une infiltration éventuelle de carburant vers la surface du cylindre.

La dite surface périphérique a, au moins dans les zones les plus proches de la paroi du cylindre, une forme sensiblement toroïdale, c'est à dire que sa section dans un plan radial passant par l'axe du cylindre présente une courbure dont la concavité est orientée vers le dit axe. Cette disposition fait que la surface d'impact des jets est alors pratiquement en tout point orientée sensiblement orthogonalement aux différentes parties du jet, ce qui est favorable à la pulvérisation du carburant.

De plus, il en résulte que les dimensions maximales de la chambre de combustion peuvent être sensiblement plus grandes que celles de son bord inférieur. De ce fait, malgré la réduction relative de la section globale de la chambre de combustion au niveau de son bord inférieur, la place disponible pour les soupapes peut ne pas être sensiblement réduite.

Selon un mode de réalisation particulièrement intéressant de ce dernier point de vue, la culasse pourra être du type dit "conique" ou "en toit", c'est à dire avec les axes de soupapes inclinés par rapport à l'axe du cylindre et convergents vers l'intérieur du cylindre, les sièges de soupapes étant alors situés sur une surface de forme générale conique ou en toit à deux ou quatre pentes, cette surface étant ménagée en creux dans la culasse. Grâce à cette inclinaison, la distance disponible entre l'injecteur et la périphérie de la chambre de combustion peut être au moins légèrement accrue, permettant donc d'accroître corrélativement le diamètre des soupapes.

Selon un autre mode de réalisation, la chambre de combustion est constituée de plusieurs cavités formées par les espaces nécessaires aux déplacements des soupapes. Ces cavités forment des sortes de lobes répartis autour de l'axe du cylindre et en relation entre eux vers le centre de la chambre de combustion, la paroi périphérique sur laquelle se produisent les impacts des jets étant alors constituée par la succession continue des parois latérales de ces cavités. On peut alors jouer sur les formes de ces cavités pour créer des interactions particulières entre leurs surfaces et les mouvements aérodynamiques des gaz introduits dans la chambre de combustion, pour favoriser le mélange entre carburant et comburant.

D'autres caractéristiques et avantages apparaîtront dans la description qui va être faite, de manière nullement limitative, de deux modes de réalisation de l'invention.

On se reportera aux dessins annexés dans lesquels :
- les figures 1 et 2 illustrent l'état de la technique et ont déjà été commentées au début de ce mémoire,
- la figure 3 est une vue en plan de la paroi de la culasse obturant le cylindre, dans le premier mode de réalisation
- la figure 4 est une vue en coupe selon la ligne 4-4 de la figure 3,
- la figure 5 est une vue en plan de la paroi de la culasse obturant le cylindre, dans le second mode de réalisation,
- la figure 6 est une vue en coupe selon la ligne 6-6 de la figure 5,
- la figure 7 est une vue en coupe selon la ligne 7-7 de la figure 5.

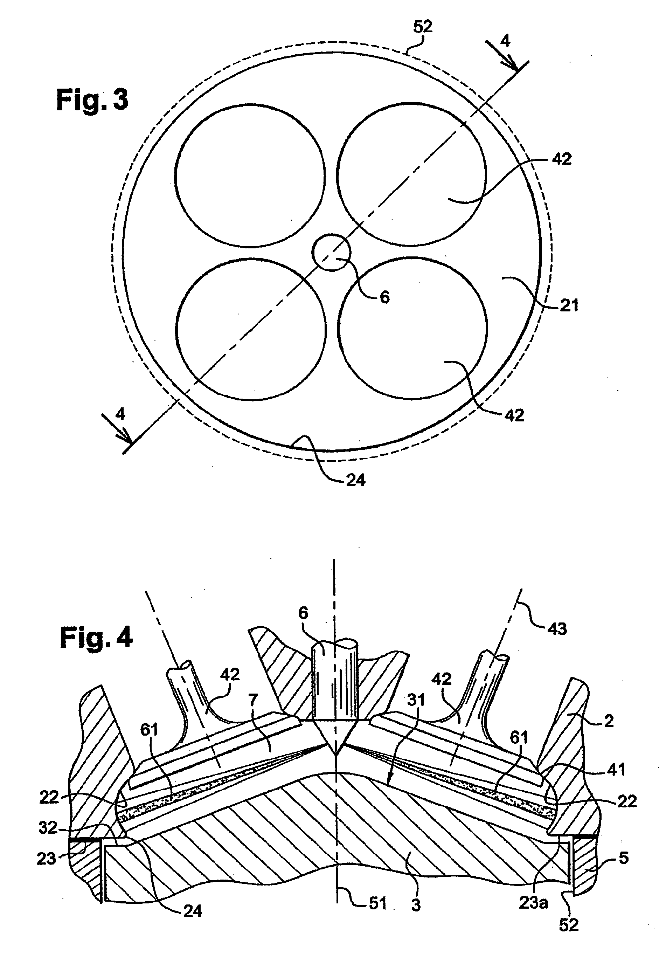

Dans le premier mode de réalisation, illustré figures 3 et 4, la surface 21 de la culasse 2 confrontant le piston 3 a une forme générale conique, les sièges 41 des soupapes 42 étant réalisés sur cette surface conique, et les axes 43 des soupapes étant sensiblement concourants sur l'axe 51 du cylindre 5.

La surface supérieure 31 du piston est également de forme conique, de conicité sensiblement équivalente à celle de la surface 21 de la culasse.

Un injecteur 6 est monté sur la culasse, en position centrale entre les soupapes.

La chambre de combustion 7 est déterminée entre la surface conique 21 de la culasse, la surface conique 31 du piston lorsqu'il est au point mort haut, tel qu'illustré figure 4, et une surface périphérique 22 prolongeant la surface conique 21 jusqu'au niveau de la face inférieure 23 de la culasse constituant le plan de joint entre culasse et cylindre. La jonction entre la surface périphérique 22 et la face inférieure 23 de la culasse forme une arête vive 24 qui peut être légèrement adoucie. Dans ce mode de réalisation, cette arête est circulaire et a un diamètre inférieur à celui du cylindre, par exemple de l'ordre de 10 millimètres pour un diamètre de cylindre de l'ordre de 100 mm.

Cette arrête est donc décalée vers l'axe d cylindre par rapport à la surface interne 52 de celui-ci, et définit une zone annulaire 23a de la surface inférieure 23 de la culasse délimitée par cette arête et par la surface 52 du cylindre. En face de cette zone annulaire 23a, la face supérieure du piston comporte également une surface annulaire sensiblement plane 32, de dimension correspondante, assurant la liaison entre la surface conique supérieure 31 du piston et sa surface latérale.

La surface périphérique 22 a une forme en portion de tore, permettant d'augmenter le diamètre interne de la chambre de combustion entre le bas de la surface conique 21 et l'arête 24. Les jets 61 de carburant issus des trous de l'injecteur 6, dont l'orientation est prédéterminée à cet effet, sont projetés contre cette surface toroïdale, comme on le voit bien figure 4, où ils se pulvérisent. Quelle que soit la position du piston au moment de l'injection, ils ne peuvent atteindre la surface 52 du cylindre. Le carburant éventuellement condensé sur la surface périphérique 2 de la culasse s'écoulera en tombant à partir de l'arête 24 dans le volume du cylindre, sans couler contre la surface 22 du cylindre.

On notera que dans ce premier mode de réalisation, la surface supérieure du piston pourrait aussi ne pas être conique, par exemple être plate.

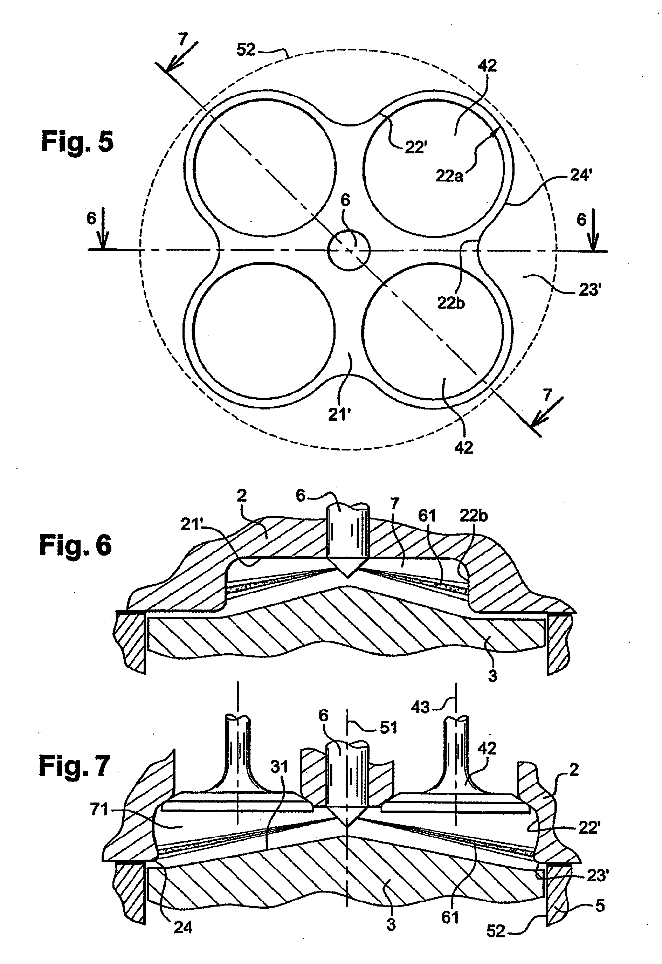

Dans le deuxième mode de réalisation représenté figures 5 à 7, les axes 43 des soupapes 42 sont parallèles à l'axe 51 du cylindre 5, les sièges des soupapes étant alors coplanaires, et réalisés sur une surface plane 21' du fond de la chambre de combustion. Cette surface plane 21 est reliée à la surface inférieure 23' de la culasse par une surface périphérique continue 22' dont les génératrices sont orientées selon une direction générale parallèle à l'axe du cylindre, constituée alternativement d'éléments concaves 22a en arcs de cercles formant des cavités 71 épousant le contour des soupapes et d'éléments convexes 22b reliant les dits éléments concaves, dans les zones entre les soupapes 42.

Comme dans l'exemple précédent, le bord 24 de la chambre de combustion dont la périphérie est ainsi déterminée par la surface 22', est située en totalité à l'intérieur du cercle formant le bord de la surface latérale 52 du cylindre.

Les jets de l'injecteur sont projetés, en fonction de leurs orientations angulaires autour de l'axe du cylindre, soit sur les parties concaves 22a soit sur les parties convexes 22b de la surface 22', et donc sans atteindre la surface 52 du cylindre, quelle que soit la position du piston au moment de l'injection.

La surface supérieure du piston pourra ici aussi être conique, plate ou de forme adaptée pour coopérer de manière optimale avec la forme de la surface périphérique de la chambre de combustion.

Ce mode de réalisation présente par ailleurs l'avantage de pouvoir induire une très forte turbulence, favorable à un bon déroulement de la combustion.

L'invention n'est pas limitée au mode de réalisation donné ci-dessus uniquement à titre d'exemple. En particulier, elle peut s'applique à tout type de moteur alternatif de type Diesel à injection directe, qu'ils soient à deux ou quatre temps. Egalement, les injecteurs utilisés peuvent être des injecteurs à nappe.

Egalement, bien que les exemples montrent quatre soupapes par cylindre, on comprendra aisément que l'invention pourra être adaptée à un nombre de soupapes par cylindre inférieur ou supérieur.

## Revendications

1. Moteur à combustion interne à injection directe, comportant au moins un cylindre (5) et un piston (3) mobile axialement dans le cylindre, et dans lequel le carburant est injecté dans une chambre de combustion (7) par un injecteur (6) fixé sur une culasse (2) obturant une extrémité du cylindre et comportant des soupapes et formant la dite chambre de combustion, le nez de l'injecteur dépassant dans la chambre de combustion et comportant des orifices d'injection du carburant disposés de manière que les jets (61) de carburant soient dirigés vers une surface périphérique (22, 22') de la dite chambre de combustion, **caractérisé en ce que** ladite surface périphérique est continue et a un bord inférieur (24) situé en retrait vers l'axe (51) du cylindre par rapport à la surface latérale (52) du cylindre, et **en ce que** la surface périphérique (22) a, au moins dans les zones les plus proches de la paroi (52) du cylindre, une forme sensiblement en portion de tore.

2. Moteur à combustion interne selon la revendication 1, **caractérisé en ce que** la périphérie (32) de la face supérieure (31) du piston (3) est recouverte par une zone annulaire (23a) de la surface inférieure (23) de la culasse délimitée par le bord inférieur (24) de la surface périphérique (22) et par la surface latérale (52) du cylindre, lorsque le piston (3) est voisin du point mort haut.

3. Moteur à combustion interne selon la revendication 1, **caractérisé en ce que** les axes (43) des soupapes (42) sont inclinés par rapport à l'axe (51) du cylindre (5) et convergents vers l'intérieur du cylindre, les sièges (41) de soupapes étant alors situés sur une surface (21) de forme générale conique ou en toit à deux ou quatre pentes, cette surface étant ménagée en creux dans la culasse (2).

4. Moteur à combustion interne selon la revendication 3, **caractérisé en ce que** la surface supérieure (31) du piston est de forme conique, de conicité sensiblement équivalente à celle de la surface (21) de la culasse

5. Moteur à combustion interne selon la revendication 1, **caractérisé en ce que** la chambre de combustion (7) est constituée de plusieurs cavités (71) permettant le déplacement des soupapes (42), réparties autour de l'axe (51) du cylindre et en relation entre elles vers le centre de la chambre de combustion (7), la paroi périphérique (22') étant alors constituée par la succession continue des parois latérales (22a) de ces cavités.

6. Moteur à combustion interne selon la revendication 5, **caractérisé en ce que** les axes (43) des soupapes (42) sont parallèles à l'axe (51) du cylindre (5), les sièges (41) des soupapes étant coplanaires et réalisés sur une surface plane (21') du fond de la chambre de combustion (7) dans la culasse.

## Claims

1. Direct injection internal combustion engine, comprising at least one cylinder (5) and a piston (3) which can move axially in the cylinder, and in which the fuel is injected into a combustion chamber (7) by an injector (6) mounted on a cylinder head (2) closing one end of the cylinder and comprising valves and forming the said combustion chamber, the tip of the injector projecting into the combustion chamber and comprising fuel injection holes disposed so that the jets (61) of fuel are directed towards a peripheral surface (22, 22') of the said combustion chamber, **characterized in that** the said peripheral surface is continuous and has a lower edge (24) located set back towards the axis (51) of the cylinder in relation to the lateral surface (52) of the cylinder, and **in that** the peripheral surface (22) has, at least in the areas nearest to the wall (52) of the cylinder, a shape generally like a portion of a torus.

2. Internal combustion engine according to Claim 1, **characterized in that** the periphery (32) of the upper face (31) of the piston (3) is overlapped by an annular area (23a) of the lower surface (23) of the cylinder head defined by the lower edge (24) of the peripheral surface (22) and the lateral surface (52) of the cylinder, when the piston (3) is near top dead centre.

3. Internal combustion engine according to Claim 1, **characterized in that** the axes (43) of the valves (42) are inclined in relation to the axis (51) of the cylinder (5) and converge towards the inside of the cylinder, the valve seats (41) then being located on a surface (21) of conical general shape or like a roof with two or four sloping sides, this surface being hollowed out in the cylinder head (2).

4. Internal combustion engine according to Claim 3, **characterized in that** the upper surface (31) of the piston is of conical shape, of conicity generally equal to that of the surface (21) of the cylinder head.

5. Internal combustion engine according to Claim 1, **characterized in that** the combustion chamber (7) is composed of several cavities (71) permitting the displacement of the valves (42), distributed about the axis (51) of the cylinder and in relation to each other towards the centre of the combustion chamber (7), the peripheral wall (22') then being constituted by the continuous succession of the lateral walls (22a) of these cavities.

6. Internal combustion engine according to Claim 5, **characterized in that** the axes (43) of the valves (42) are parallel to the axis (51) of the cylinder (5), the valve seats (41) being coplanar and made on a flat surface (21') of the bottom of the combustion chamber (7) in the cylinder head.

## Patentansprüche

1. Brennkraftmaschine mit Direkteinspritzung, die mindestens einen Zylinder (5) und einen axial in dem Zylinder beweglichen Kolben (3) umfasst und bei der der Kraftstoff durch eine Einspritzdüse (6) in eine Brennkammer (7) eingespritzt wird, wobei die Einspritzdüse an einem Zylinderkopf (2) befestigt ist, der ein Ende des Zylinders schließt und Ventile aufweist und die Brennkammer bilden, wobei die Spitze der Einspritzdüse in die Brennkammer ragt und Öffnungen zum Einspritzen des Kraftstoffes aufweist, die so angeordnet sind, dass die Strahlen (61) des Kraftstoffes zu einer Umfangsfläche (22, 22') der Brennkammer gerichtet sind, **dadurch gekennzeichnet, dass** die Umfangsfläche durchgehend ist und einen unteren Rand (24) aufweist, der bezüglich der Seitenfläche (52) des Zylinders zur Achse (51) des Zylinders zurückspringt, und dass die Umfangsfläche (22) zumindest in den am nächsten zu der Wand (52) des Zylinders liegenden Bereichen eine Form aufweist, die im Wesentlichen einem Teil eines Torus entspricht.

2. Brennkraftmaschine nach Anspruch 1, **dadurch gekennzeichnet, dass** der Umfang (32) der Oberseite (31) des Kolbens (3) von einem ringförmigen Bereich (23a) der Unterseite (23) des Zylinderkopfs, der durch den unteren Rand (24) der Umfangsfläche (22) und durch die Seitenfläche (52) des Zylinders begrenzt wird, bedeckt wird, wenn sich der Kolben (3) neben dem oberen Totpunkt befindet.

3. Brennkraftmaschine nach Anspruch 1, **dadurch gekennzeichnet, dass** die Achsen (43) der Ventile (42) bezüglich der Achse (51) des Zylinders (5) geneigt sind und zum Inneren des Zylinders konvergieren, wobei sich die Sitze (41) der Ventile dann an einer Fläche (21) mit einer allgemein konischen Form oder Dachform mit zwei oder vier Schrägen befinden, wobei diese Fläche vertieft in dem Zylinderkopf (2) ausgebildet ist.

4. Brennkraftmaschine nach Anspruch 3, **dadurch gekennzeichnet, dass** die Oberseite (31) des Kolbens eine konische Form aufweist, mit einer Konizität, die im Wesentlichen der der Fläche (21) des Zylinderkopfes entspricht.

5. Brennkraftmaschine nach Anspruch 1, **dadurch gekennzeichnet, dass** die Brennkammer (7) aus mehreren Hohlräumen (71) besteht, die das Verschieben der Ventile (42) gestatten, die um die Achse (51) des Zylinders und bezüglich einander zur Mitte der Brennkammer (7) verteilt sind, wobei die Umfangswand (22') dann aus der kontinuierlichen Folge der Seitenwände (22a) dieser Hohlräume besteht.

6. Brennkraftmaschine nach Anspruch 5, **dadurch gekennzeichnet, dass** die Achsen (43) der Ventile (42) parallel zur Achse (51) des Zylinders (5) verlaufen, wobei die Sitze (41) der Ventile koplanar sind und auf einer ebenen Fläche (21') des Bodens der Brennkammer (7) in dem Zylinderkopf hergestellt sind.
